# EUROPEAN PATENT APPLICATION

(11) **EP 3 683 134 A1**
(43) Date of publication of application: **22.07.2020**
(21) Application number: 19152510.4
(22) Date of filing: 18.01.2019
(51) Int. Cl.: B63B 59/04, B08B 17/02, B63B 59/08

(54) **ANTI-BIOFOULING ARRANGEMENT AND METHOD OF DESIGNING SUCH AN ARRANGEMENT**

(71) Applicant: Koninklijke Philips N.V., 5656 AG Eindhoven (NL)
(72) Inventor: Hietbrink, Roelant Boudewijn, 5656 AE Eindhoven (NL); Niessen, Eduard Matheus Johannes, 5656 AE Eindhoven (NL); Schudelaro, Antonius Adrianus Petrus, 5656 AE Eindhoven (NL)
(74) Representative: de Haan, Poul Erik

(57) **Abstract**

In an anti-biofouling context, an arrangement (1) is provided which comprises an object (10) and a light-emitting system (20) arranged on at least a main surface (11a) of the object (10). The light-emitting system (20) includes a plurality of light sources (21) for emitting anti-biofouling light and is configured to emit the light in a direction away from the object (10). The light sources (21) are arranged in the light-emitting system (20) in at least two different light-emitting groups (22) having respective main directions of emission (23) of the anti-biofouling light, the main directions of emission (23) of at least two light-emitting groups (22) having different spatial orientations when viewed on an unfolded and flattened area of the main surface (11a) where the light-emitting groups (22) are located. Consequently, the area that is reached by the anti-biofouling light during operation of the arrangement (1) can be adjusted to particular requirements.

## Description

### FIELD OF THE INVENTION

In the first place, the invention relates to an anti-biofouling arrangement, comprising: an object, and a light-emitting system arranged on at least a main surface of the object, the light-emitting system including a plurality of light sources configured to emit anti-biofouling light in an activated state thereof, wherein the light-emitting system is configured to emit the anti-biofouling light in a direction away from the object.

In the second place, the invention relates to an anti-biofouling unit configured to be used in an anti-biofouling arrangement as defined in the foregoing.

In the third place, the invention relates to a set of anti-biofouling units configured to be used in an anti-biofouling arrangement as defined in the foregoing for composing at least a portion of the light-emitting system of the anti-biofouling arrangement on a main surface of an object.

In the fourth place, the invention relates to a method of applying a light-emitting system to at least a main surface of an object in an anti-biofouling arrangement as defined in the foregoing.

In the fifth place, the invention relates to a method of designing an anti-biofouling arrangement with an object and a light-emitting system to be arranged on at least a main surface of the object and to be provided with a plurality of light sources for emitting anti-biofouling light, wherein the light-emitting system is designed to emit the anti-biofouling light in a direction away from the object.

### BACKGROUND OF THE INVENTION

Various structures that are temporarily or permanently exposed to an aqueous environment are prone to biofouling. For instance, in a marine environment (including both seawater and freshwater), ships, oil rigs, pipelines, support structures for sea-based wind turbines, structures for harvesting tidal/wave energy, etc. are subject to organisms growing on them, especially in areas that are temporarily or permanently exposed to water. As a result, the drag of ships increases, the moving of parts may be hampered, and filters may become clogged. In respect of the influence of biofouling on the drag of ships, it is noted that biofouling can involve an increase of up to 40% in fuel consumption.

In general, biofouling is the accumulation of microorganisms, plants, algae, small animals and the like on surfaces. According to some estimates, over 1,800 species comprising over 4,000 organisms are responsible for biofouling. Hence, biofouling is caused by a wide variety of organisms, and involves much more than an attachment of barnacles and seaweeds to surfaces. Biofouling is divided into micro fouling that includes biofilm formation and bacterial adhesion, and macro fouling that includes the attachment of larger organisms. Due to the distinct chemistry and biology that determine what prevents them from settling, organisms are also classified as being hard or soft. Hard fouling organisms include calcareous organisms such as barnacles, encrusting bryozoans, mollusks, polychaetes and other tube worms, and zebra mussels. Soft fouling organisms include non-calcareous organisms such as seaweed, hydroids, algae and biofilm "slime". Together, these organisms form a fouling community.

As mentioned in the foregoing, biofouling creates substantial problems. Various solutions have been developed to address these problems. For instance, robots exist that are designed to scrape biofouling from the hulls of vessels. WO 2014/188347 A1 discloses another solution, namely a solution that involves applying an anti-biofouling layer to a surface that would otherwise be prone to biofouling, wherein the anti-biofouling layer is arranged for emitting ultraviolet light away from said surface. In this way, the risk of organisms growing on said surface (i.e. now the surface from which the ultraviolet light emanates) is reduced. Alternatively, a surface that is subject to biofouling may be irradiated with ultraviolet light, wherein it is to be noted that the solution according to WO 2014/188347 A1 is normally preferred for surfaces in water of low transparency to the ultraviolet light. In general, ultraviolet light of type C, i.e. UV-C light, is known for being effective when it comes to anti-biofouling so that good results may be achieved.

Especially when UV-C light is radiated away from a surface that is subject to biofouling, there is a potential risk of living organisms other than the biofouling organisms, for instance human beings and/or animals, receiving too much UV-C light, i.e. a dose of UV-C light that may be harmful to their health, when they are close to said surface. Further, it may be so that a surface is shaped in a certain way, such that some parts of the surface are harder to protect than other parts. This may be the case, for example, if the surface is curved.

### SUMMARY OF THE INVENTION

It is an object of the invention to provide an anti-biofouling arrangement that is very well capable of performing an anti-biofouling function as desired, and that is designed to alleviate at least one of the above-mentioned issues of i) being potentially harmful to the health of organisms close to a surface to be protected by means of the anti-biofouling arrangement and ii) being less effective at areas of the surface where the surface has a certain non-planar shape and/or where an irregularity is present. In view thereof, the invention provides an anti-biofouling arrangement, comprising: an object, and a light-emitting system arranged on at least a main surface of the object, the light-emitting system including a plurality of light sources configured to emit anti-biofouling light in an activated state thereof, wherein the light-emitting system is configured to emit the anti-biofouling light in a direction away from the object, and wherein the light sources are arranged in the light-emitting system in at least two different light-emitting groups, each light-emitting group being configured to emit the anti-biofouling light in a respective main direction of emission and the main directions of emission of at least two light-emitting groups having different spatial orientations when viewed on an unfolded and flattened area of the main surface where the at least two light-emitting groups are located.

According to the invention, in an anti-biofouling arrangement comprising a light-emitting system that is configured to emit anti-biofouling light in a direction away from an object, the light-emitting system is not of a simple, basic design in which the light sources are arranged so as to emit the light in the same direction throughout the entire light-emitting system, such as along a normal vector of the light-emitting system. Instead, the light sources are arranged in the light-emitting system in at least two different light-emitting groups, each light-emitting group being configured to emit the anti-biofouling light in a respective main direction of emission and the main directions of emission of at least two light-emitting groups having different spatial orientations when viewed on an unfolded and flattened area of the main surface where the at least two light-emitting groups are located. Thus, applying the invention enables adapting the direction in which light is emitted from the light-emitting system for the purpose of meeting specific needs, such as a need to let the light shine in a particular direction in the object's surroundings, or a need to completely cover irregularities of the main surface with the light. The different light-emitting groups may be arranged directly alongside each other or at a distance with respect to each other, whatever is appropriate in a given situation. In this respect, it is noted that it may be practical for the different light-emitting groups to be arranged adjacent to each other on the main surface, but this is not essential.

Examples of objects which may be part of the anti-biofouling arrangement according to the invention include ships and other vessels, marine stations, sea-based oil or gas installations, buoyancy devices, support structures for wind turbines at sea, structures for harvesting wave/tidal energy, sea chests, underwater tools, etc. In general, it is noted that the invention is not only suitable to be applied in a context of objects for use in seawater, but involves advantages in respect of any object for use in any type of water that is known to contain biofouling organisms.

The different spatial orientations of the main directions of emission of the at least two different light-emitting groups of the light-emitting system can be distinguished in a two-dimensional space. For example, when the option of the object being a vessel is taken into account, in which case a main surface of the object is a part of the vessel's hull that is located at one side of the vessel, and it is assumed that the main surface is at least partially covered with the light-emitting system, the different spatial orientations of the main directions of emission of at least two different light-emitting groups on the main surface can be distinguished in a cross-sectional plane of the vessel. For the sake of clarity, it is noted that viewing the light-emitting system on an unfolded and flattened area of the main surface is a theoretical experiment/thought experiment aimed at determining the directions in which the anti-biofouling light shines from the light-emitting system in an activated condition without the influence of whatever shape the main surface may have.

Still referring to the option of applying the invention in the context of a vessel, it is noted that the local shape of the hull at the position of any particular area of the hull is a factor in determining an orientation of a direction of emission of light from that area in the space of the vessel's surroundings. The inevitable influence of this factor on the main directions of emission of the light-emitting groups of the light-emitting system is eliminated by considering the an unfolded and flattened area of the main surface on which the light-emitting groups are present. Thus, the definition of the invention is suitable to be used for assessing whether different main directions of emission can be found on a main surface of an object as such, i.e. independently from the shape of the main surface.

The fact that light-emitting groups having respective main directions of emission are defined should not be understood so as to imply that all individual light sources of a light-emitting group are configured so as to emit light in exactly the same direction from the light-emitting group in the imaginary unfolded and flattened appearance of the main surface. Instead, the definition of the light-emitting groups should be understood for its practical meaning, implying that it may be so that a light-emitting group comprises individual light sources which are deviant from the major part of the total number of light sources of the light-emitting group, wherein the main direction of emission of such a light-emitting group is a general, overall direction in which light shines from the light-emitting group during operation thereof, as a bundle of mainly substantially parallel light beams, as it were, with the exception of only a limited number of individual light beams which do not detract from the general appearance of the bundle.

In practice, it may be so that the object has a generally symmetrical appearance, in which case the main surface may be a single-symmetry surface of the object. For example, the object may be a vessel, and the main surface may be a part of the vessel's hull that is located at one side of the vessel. In general, it is noted that the invention is not limited to any particular design/appearance of the object. The object may comprise one, more or less continuous main surface, but it is also possible that the object comprises at least two main surfaces and at least one transitional structure between the main surfaces. In the context of a vessel, the parts of the vessel's hull located at either side of the vessel are examples of two main surfaces of the vessel, while a bottom rim and prow rim of the vessel are examples of a transitional structure between the main surfaces. In the context of a cube-shaped object, each of the six side surfaces of the object is a main surface of the object, and the ribs of the object are transitional structures of the object. An object may be shaped such that the object has main surfaces which are separated by symmetry lines of the object on the object's surface. In the case of a vessel, such symmetry lines may coincide with welding seams on the vessel's hull, but this is not necessary.

In an embodiment of the anti-biofouling arrangement according to the invention, the light-emitting system comprises at least two discrete anti-biofouling units. The option of having a number of discrete anti-biofouling units may be advantageous in case a surface to which the light-emitting system is to be applied has large dimensions, for example. The discrete anti-biofouling units as mentioned may for instance be substantially size-limited in two orthogonal directions perpendicular to a thickness direction of the light-emitting system, i.e. in two directions along the surface, in which case the anti-biofouling units may be referred to as anti-biofouling tiles, or substantially size-limited in only one direction perpendicular to the thickness direction of the light-emitting system, in which case the anti-biofouling units may be referred to as anti-biofouling strips.

The light-emitting system may comprise at least two anti-biofouling units each including at least a portion of a single one of the light-emitting groups of the light-emitting system. It is possible for the at least two anti-biofouling units to be practically identical, which may involve the advantage of keeping manufacturing costs of the light-emitting system as low as possible. Additionally, or alternatively, the light-emitting system may comprise at least one anti-biofouling unit including at least a portion of at least two different light-emitting groups of the light-emitting system. In practice, in such an anti-biofouling unit, a portion of the unit associated with one light-emitting group can be distinguished from a portion of the unit associated with another light-emitting group by comparing orientations of light sources to each other and/or assessing orientations of light sources in respect of one or more structural features of the unit, such as a perimeter of the unit or a power device arranged in/on the unit. Using an anti-biofouling unit including at least a portion of at least two different light-emitting groups of the light-emitting system may be beneficial in case at least a portion of the light-emitting system is positioned near intersecting welding seams on a vessel's hull, for example, as in such a case, a portion of the one welding seam may be provided with anti-biofouling light by light sources of one light-emitting group, the main direction of emission of that group being oriented towards the one welding seam, and a portion of the other welding seam may be provided with anti-biofouling light by light sources of another light-emitting group, the main direction of emission of that light-emitting group being oriented towards the other welding seam.

In the context of the invention, it is possible for all anti-biofouling units of a light-emitting system to include at least a portion of only a single one of the light-emitting groups of the light-emitting system. In such a case, at least two types of anti-biofouling units which are different as far as the main direction of emission of the at least a portion of the single one of the light-emitting groups in the anti-biofouling unit is concerned are used for the purpose of realizing the feature according to which the main directions of the light-emitting groups of the total light-emitting system have different spatial orientations when viewed on an unfolded and flattened area of the main surface where the light-emitting groups are located.

The optional anti-biofouling units of the light-emitting system may be of any suitable design. For example, at least one anti-biofouling unit may include a slab of material that is transparent to the anti-biofouling light. The slab of material may have a function in transporting/guiding light shining from the light sources in an activated state, and may comprise a light-outcoupling surface having any suitable surface structure. The light sources of the anti-biofouling unit may be associated with the slab of material in any suitable way. For example, it may be practical for the light sources to be embedded in the slab of material.

The anti-biofouling light may be ultraviolet light, particularly ultraviolet light of the UV-C type, which does not imply that other types of anti-biofouling light are not covered by the invention as well. The light sources of the light-emitting system may be provided in any suitable form. For example, the light-emitting system may comprise a layer of material that can be activated to emit light. On the other hand, it is possible for the light-emitting system to comprise a number of discrete light emitters such as LEDs. Also, it is noted that a main surface may be of any shape and size, wherein at least a portion of the main surface may be non-planar (non-flat).

In a case in which the object comprises at least one protrusion protruding with respect to the main surface, it may be beneficial if a portion of the light-emitting system located in the vicinity of the at least one protrusion includes at least one light-emitting group having a main direction of emission towards the at least one protrusion, so that coverage of the at least one protrusion with anti-biofouling light may be sufficient to achieve good anti-biofouling effects on the at least one protrusion. Similarly, in a case in which the main surface has at least one uneven area, such as a concave area or a convex area, it may be beneficial if a portion of the light-emitting system located at the position of the at least one uneven area or in the vicinity of the at least one uneven area includes at least one light-emitting group having a main direction of emission towards the at least one uneven area, so that coverage of the at least one uneven area with anti-biofouling light may be sufficient to achieve good anti-biofouling effects in the at least one uneven area. In cases as mentioned, a specific advantageous aspect of the invention is realized, which resides in the fact that anti-biofouling light is not only effectively used at the position where it actually exits the light-emitting system, but also at at least one another position. This aspect may help in achieving good anti-biofouling results at the lowest possible light intensity and power consumption.

In a feasible embodiment of the anti-biofouling arrangement according to the invention, assuming a normal, operational orientation of the object, the main direction of emission of at least one of the light-emitting groups of the light-emitting system is along the gravity vector or at least has a component along the gravity vector, i.e. downwards. Such an embodiment may be beneficial in a situation in which the anti-biofouling light emitted by the light sources of the light-emitting system is of the type that may be harmful to the health of human beings and/or animals, and in which human beings and/or animals may be expected to come near the object at a position that is more or less upward from or to the side of the main surface at which the light-emitting system is arranged. For example, in case the object is a vessel and the main surface is a part of the vessel's hull, it may be beneficial if the main direction of emission of at least one light-emitting group located in a hull area at the vessel's load line (adjacent to or including the load line) is downward with respect to the vessel's horizontal or at least has a component that is downward with respect to the vessel's horizontal. In such a case, a situation in which anti-biofouling light from the light-emitting system may reach human beings and/or animals present on a quay alongside the vessel is avoided, provided that the light-emitting groups of which the main direction of emission is downwardly oriented are arranged so as to cover a sufficiently large area of the hull that extends to a sufficiently deep level. For example, it may be beneficial to have a main direction of emission that is oriented downwardly at an angle in a range of 45° to 90° with respect to the vessel's horizontal (which normally coincides with the earth's horizontal). The main direction of emission of light-emitting groups located in a hull area at a level closer to the vessel's bottom may have a downward orientation as well, which may be a less steep downward orientation in that case, but a sideward orientation or a (slightly) upward orientation are also possible.

In conformity with what has been explained in the foregoing, the invention also relates to an anti-biofouling unit configured to be used in an anti-biofouling arrangement of which the basic and optional features are explained in the foregoing, i.e. an anti-biofouling arrangement in which the main directions of emission of at least two different light-emitting groups are adapted to factors relating to the surroundings of an object and/or to the (local) appearance of a main surface of an object. In particular, the anti-biofouling unit includes at least a portion of at least two different light-emitting groups of the light-emitting system.

Further, the invention relates to a set of anti-biofouling units configured to be used in an anti-biofouling arrangement of which the basic and optional features are explained in the foregoing, for composing at least a portion of the light-emitting system of the anti-biofouling arrangement on a main surface of an object. In such a set of anti-biofouling units, each anti-biofouling unit includes at least a portion of at least one of the light-emitting groups of the light-emitting system. The set comprises at least two types of anti-biofouling units which are different as far as the orientation of the at least a portion of the at least one of the light-emitting groups in the anti-biofouling unit is concerned.

Still further, the invention relates to a method of applying a light-emitting system to at least a main surface of an object in an anti-biofouling arrangement of which the basic and optional features are explained in the foregoing, wherein the light-emitting system is positioned with respect to the at least the main surface and fixed on the object. As suggested in the foregoing, the light-emitting system may comprise a number of discrete anti-biofouling units, in which case the process of applying the light-emitting system to a main surface involves arranging the anti-biofouling units at appropriate positions on the main surface. Further, it is noted that when identical anti-biofouling units including only a single light-emitting group are used and arranged in a row on a main surface, for example, it is still possible to realize a situation in which the anti-biofouling light is emitted in different main directions of emission, namely by varying the orientation of the anti-biofouling units in the row. When the anti-biofouling units are shaped like square or rectangular tiles, this can be done by arranging one or more units in an orientation that is rotated a quarter turn with respect to the orientation of the remainder of the anti-biofouling units.

The invention also relates to a method of designing an anti-biofouling arrangement with an object and a light-emitting system to be arranged on at least a main surface of the object and to be provided with a plurality of light sources for emitting anti-biofouling light, wherein the light-emitting system is designed to emit the anti-biofouling light in a direction away from the object. According to the invention, in conformity with what has already been explained in the foregoing, the method involves designing the light-emitting system to include at least two different light-emitting groups of light sources, wherein each light-emitting group is designed to emit the anti-biofouling light in a respective main direction of emission, and determining the main directions of emission of the light-emitting groups of the light-emitting system in dependency of the intended position of the light-emitting groups on the main surface.

The following remarks relating to the method of designing an anti-biofouling arrangement follow from consideration of a number of above-mentioned options existing within the framework of the invention. In particular, in case the object is designed with at least one protrusion protruding with respect to the main surface, it is advantageous if a portion of the light-emitting system to be located in the vicinity of the at least one protrusion is designed with at least one light-emitting group having a main direction of emission towards the at least one protrusion. Likewise, in case the main surface is designed with at least one uneven area, it is advantageous if a portion of the light-emitting system to be located in the at least one uneven area or in the vicinity of the at least one uneven area is designed with at least one light-emitting group having a main direction of emission towards the at least one uneven area. Further, in case the object is a vessel and the main surface is a part of the vessel's hull, it is advantageous if a portion of the light-emitting system to be located in a hull area at the vessel's load line is designed with at least one light-emitting group having a main direction of emission that is downward with respect to the vessel's horizontal or at least has a component that is downward with respect to the vessel's horizontal.

The above-described and other aspects of the invention will be apparent from and elucidated with reference to the following detailed description of embodiments of an anti-biofouling arrangement comprising a ship, and further comprising a light-emitting system arranged on the ship's hull for the purpose of emitting anti-biofouling light in a direction away from the ship. Particulars of these embodiments are disclosed and explained for the purpose of enhancing understanding of the invention. In no way is the invention limited to these embodiments. The ship is an example of an object including main surfaces to which the invention is applicable.

### BRIEF DESCRIPTION OF THE DRAWINGS

The invention will now be explained in greater detail with reference to the figures, in which equal or similar parts are indicated by the same reference signs, and in which:

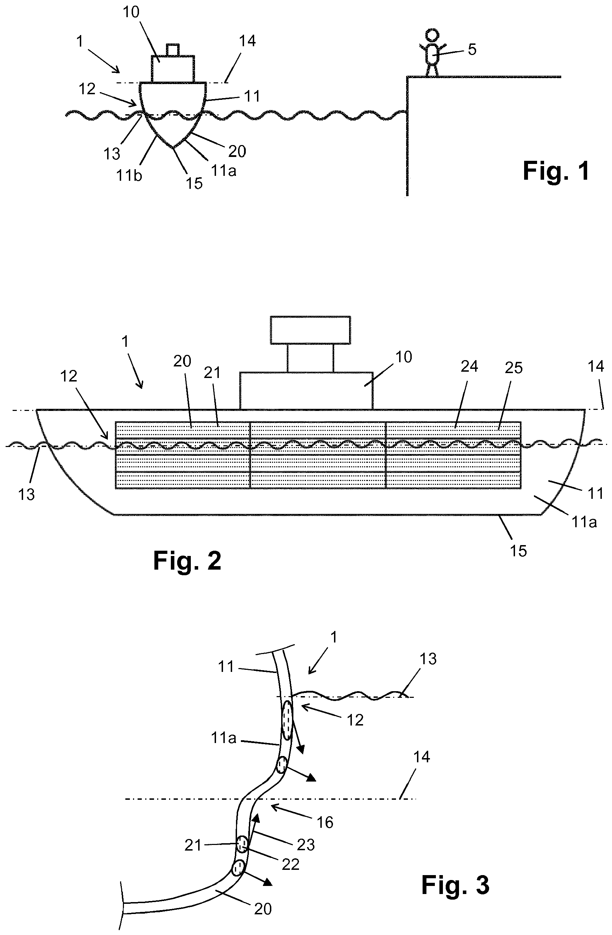

Fig. 1 diagrammatically illustrates a situation of a human being present on a quay and a ship being present near the quay,
Fig. 2 diagrammatically shows a side view of a ship and a light-emitting system arranged on the ship's hull,
Fig. 3 diagrammatically shows an outline of a portion of a ship's hull and a light-emitting system arranged on the hull, the hull portion including a concave area, wherein main directions in which anti-biofouling light shines from the light-emitting system are indicated by means of arrows, and wherein, for the sake of illustration and clarity, only a limited number of light-emitting groups of light sources of the light-emitting system are depicted,

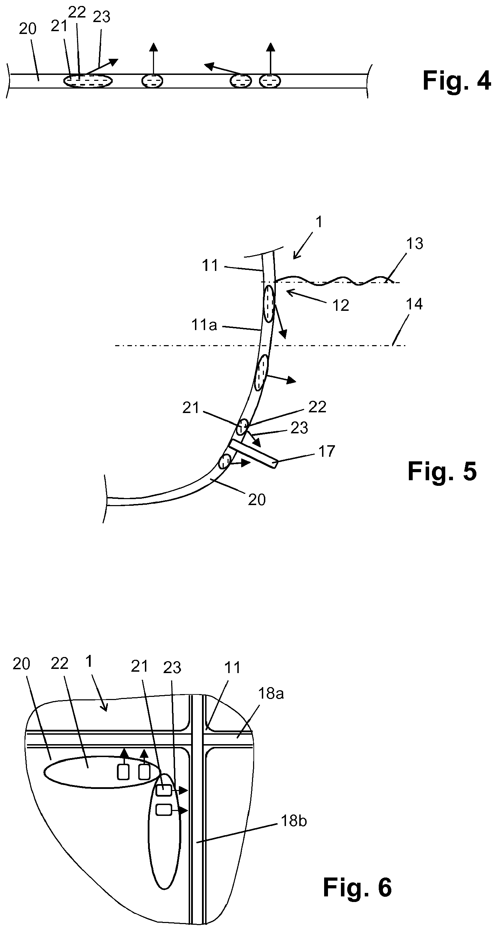

Fig. 4 diagrammatically shows the portion of the ship's hull and the light-emitting system arranged on the hull of Fig. 3 in an unfolded and flattened condition,
Fig. 5 diagrammatically shows an outline of a portion of a ship's hull and a light-emitting system arranged on the hull, and also diagrammatically shows a fin protruding from the ship, wherein main directions in which anti-biofouling light shines from the light-emitting system are indicated by means of arrows, and wherein, for the sake of illustration and clarity, only a limited number of light-emitting groups of light sources of the light-emitting system are depicted, and
Fig. 6 diagrammatically shows an outline of a portion of a ship's hull and a light-emitting system arranged on the hull, and also diagrammatically shows portions of two intersecting welding seams of the hull, wherein main directions in which anti-biofouling light shines from the light-emitting system are indicated by means of arrows, and wherein, for the sake of illustration and clarity, only a limited number of light sources of the light-emitting system are depicted.

### DETAILED DESCRIPTION OF THE EMBODIMENTS

Fig. 1 illustrates a situation in which the invention may be put to practice. Fig. 2 illustrates general aspects of an anti-biofouling arrangement according to the invention, including a ship and a number of discrete anti-biofouling tiles which are part of a light-emitting system used with the ship for the purpose of keeping the ship clean from biofouling at the position of the hull. Figs. 3-6 relate to various possible applications of the invention and serve to illustrate notable aspects of the invention.

With reference to the figures, it is noted that a feasible embodiment of an anti-biofouling arrangement 1 according to the invention comprises a ship 10 and a light-emitting system 20 arranged on the ship's hull 11. At the position of the hull 11, the ship 10 is to be subjected to an anti-biofouling action, in order to avoid formation of biofouling deposits on the hull 11 and to thereby avoid an increase of drag of the ship 10. In particular, the anti-biofouling arrangement 1 is designed to have an anti-biofouling action on the ship 10 on the basis of light radiation, continuously or from time to time, wherein it is to be noted that in order to achieve good anti-fouling effects, the light may be ultraviolet light, especially UV-C light.

As mentioned earlier, the light-emitting system 20 is arranged on the hull 11. The light-emitting system 20 is a type of system that is suitable to be used for realizing anti-biofouling effects on an object by emitting anti-biofouling light in a direction away from the object, as known from WO 2014/188347 A1, for example. In the shown example, the light-emitting system 20 has a number of light sources 21 configured to generate anti-biofouling light. In particular, in the shown example, the light sources 21 are of the type designed to realize emission of generated anti-biofouling light along a main emission axis. A practical example of the light sources 21 of the light-emitting system 20 is UV-C LEDs.

Normally, a ship 10 has a vertical plane of symmetry, and the hull 11 comprises two main surfaces 11a, 11b, namely two main surfaces 11a, 11b located at either side of the ship 10. On at least one of those main surfaces 11a, 11b, the light sources 21 are arranged in the light-emitting system 20 in at least two light-emitting groups 22. Each of those light-emitting groups 22 is configured to emit the anti-biofouling light in a main direction of emission 23 that is different from the main direction of emission 23 of at least one other light-emitting group 22. A light-emitting group 22 is a collection of light sources 21 which are configured to emit light in substantially the same direction, i.e. a collection of light sources 21 of which the main emission axes extend in substantially the same direction, besides a limited number of possible exceptions in the form of deviating individual light sources 21.

The light-emitting system 20 may comprise material that is transparent to the anti-biofouling light, that may have a structural function in embedding the light sources 21, for example, or supporting the light sources 21 in another way, and that may be arranged so as to cover areas of the hull 11. The transparent material may be provided in various slabs 24, in which case the light-emitting system 20 may be realized as a collection of tiles 25, as illustrated in Fig. 2, or strips, for example, wherein the thickness of the slabs 24 of the transparent material may be so small, even in the millimeter range, that the slabs 24 can normally be referred to as pieces of foil. During operation of the light sources 21, the transparent material may have a function in transporting the generated anti-biofouling light along the hull 11 and ensuring that the anti-biofouling light is more or less evenly spread across the hull 11, i.e. may serve as a light guide, wherein the anti-biofouling light is outcoupled from the light guide at various positions, in a direction away from the ship 10. A phenomenon like total internal reflection may contribute to the transportation of the light through the transparent material. A practical example of the transparent material is a silicone material.

The risk of biofouling of the hull 11 increases as the velocity of the ship 10 relative to its aqueous environment decreases. This means, for instance, that the risk of biofouling organisms growing on the hull 11 is larger when the ship 10 is docked in port than when it is sailing. Thus, it is especially beneficial to have and operate the light-emitting system 20 in the situation of the ship 10 being docked in port, which situation is illustrated in Fig. 1. However, in such a situation, the chance of human beings 5 and/or animals being relatively close to the ship 10 while anti-biofouling light is emitted away from at least a portion of the ship's hull 11 is also bigger, which involves the risk of human beings 5 and/or animals receiving a relatively high dose of anti-biofouling light which may be harmful to their health. In order to address this issue, the invention provides the option of having an embodiment of the light-emitting system 20 in the anti-biofouling arrangement 1 that is designed so as to ensure that anti-biofouling light that is emitted from a portion of the light-emitting system 20 located in a hull area 12 at the ship's load line 13 is emitted in a direction that is downward with respect to the ship's horizontal 14. This may be realized by having such an arrangement of the light sources 21 in the light-emitting system 20 that the main direction of emission 23 of the one or more light-emitting groups 22 present in the portion of the light-emitting system 20 covering the hull area 12 at the ship's load line 13 has a downward orientation, while the main direction of emission 23 of the one or more light-emitting groups 22 present in a lower portion of the light-emitting system 20 may have a more or less horizontal orientation, i.e. a portion that is closer to the ship's bottom 15, as illustrated in Figs. 3 and 5. In the specific context of the ship 10, the hull area 12 at the ship's load line 13, i.e. the hull area 12 that is covered by a portion of the light-emitting system 20 in which the light sources 21 are predominantly arranged so as to emit light in a downward direction, may extend from a predetermined distance below the ship's load line 13 to a predetermined distance above the ship's load line 13.

By emitting part of the anti-biofouling light in a downward direction, it is achieved that a total area of reach of the light associated with an overall horizontal or (slightly) upward orientation of the main direction of emission 23 of one or more light-emitting groups 22 is reduced, wherein particularly an area at the level of the ship's load line 13 and higher cannot be reached by the light, or only by a small dose of the light. Thus, by making certain choices in respect of the orientation of the main direction of emission 23 of the light-emitting groups 22 in different portions of the light-emitting system 20, it can be achieved that human beings 5 and/or other living organisms cannot be reached by the light, or only by a small dose of the light, so that safety of use of the anti-biofouling arrangement 1 is enhanced.

In general, a surface subject to biofouling is not necessarily planar/flat, but may instead be curved in one or more directions and include one or more convexly curved areas and/or concavely curved areas. A ship's hull 11 is an example of a curved surface, and an area of the ship's hull 11 including a concave area 16 is illustrated in Fig. 3. Further, protrusions may be arranged on the surface, which protrusions may or may not be part of the light-emitting system 20. Examples of protrusions in the context of a ship 10 include a fin 17 on the ship's hull 11, as illustrated in Fig. 5, a welding seam 18a, 18b on the ship's hull 11, as illustrated in Fig. 6, and a protrusion (not shown) arranged to protect the light-emitting system 20 against impacts of external objects such as tree trunks floating in water. In all possible cases, it is desirable to realize an anti-biofouling effect on the entire surface, whatever shape the surface may have, and also on any protrusions. According to the invention, this is done by having at least one light-emitting group 22 of which the main direction of emission 23 is particularly towards a concavely or convexly curved area, or at a protrusion, which is to be understood so as to mean that at least a component of the main direction of emission 23 of the light-emitting group 22 is oriented so as to intersect the concavely or convexly curved area, or the protrusion. This is a local application of the invention in the sense that it suffices if only one or a limited number of light sources 21 in the vicinity of a concavely/convexly curved area or a protrusion is/are arranged so as to shine anti-biofouling light on the concavely/convexly curved area or protrusion while the other light sources 21 can be arranged so as to shine light in a direction as generally intended, such as a more or less horizontal direction.

In respect of the example of welding seams on a ship's hull 11, it is noted that it is possible for the welding seams to intersect. In Fig. 6, portions of two intersecting welding seams 18a, 18b of the hull 11 are shown. In order to enable an anti-biofouling action on both welding seams 18a, 18b, it is advantageous if a portion of the light-emitting system 20 located in the vicinity of the respective welding seams 18a, 18b comprises two light-emitting groups 22 of light sources 21, wherein the main direction of emission 23 of the one light-emitting group 22 is towards one of the welding seams 18a, 18b, while the main direction of emission 23 of the other light-emitting group 22 is towards the other of the welding seams 18a, 18b.

A notable aspect of the invention is the fact that the main directions of emission 23 of the various light-emitting groups 22 have different spatial orientations when viewed on an unfolded and flattened area of a main surface 11a, 11b of an object 10. When the light-emitting system 20 is seen in a condition in which at least a portion thereof is shaped so as to follow a main surface 11a, 11b, the orientations of the main directions of emission 23 of the light-emitting groups 22 of the at least a portion of the light-emitting system 20 are partially determined by the shape of the main surface 11a, 11b. Fig. 4 is related to Fig. 3 and serves to illustrate what it looks like when an imaginary unfolded and flattened condition of a main surface 11a, 11b is considered and it is assumed that a portion of the light-emitting system 20 is arranged on the main surface 11a, 11b in that particular condition, in which the influence of the shape of the main surface 11a, 11b on the main directions of emission 23 of the light-emitting groups 22 in the portion of the light-emitting system 20 is eliminated. In the two-dimensional depiction provided by Fig. 4 of the portion of the hull 11 and the portion of the light-emitting system 20 arranged on the portion of the hull 11, it can clearly be seen that the spatial orientations of the main directions of emission 23 of the light-emitting groups 22 are different.

It will be clear to a person skilled in the art that the scope of the invention is not limited to the examples discussed in the foregoing, but that several amendments and modifications thereof are possible without deviating from the scope of the invention as defined in the attached claims. It is intended that the invention be construed as including all such amendments and modifications insofar they come within the scope of the claims or the equivalents thereof. While the invention has been illustrated and described in detail in the figures and the description, such illustration and description are to be considered illustrative or exemplary only, and not restrictive. The invention is not limited to the disclosed embodiments. The drawings are schematic, wherein details which are not required for understanding the invention may have been omitted, and not necessarily to scale.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. Any reference signs in the claims should not be construed as limiting the scope of the invention.

Elements and aspects discussed for or in relation with a particular embodiment may be suitably combined with elements and aspects of other embodiments, unless explicitly stated otherwise. Thus, the mere fact that certain measures are recited in mutually different dependent claims does not indicate that a combination of these measures cannot be used to advantage.

The term "comprise" as used in this text will be understood by a person skilled in the art as covering the term "consist of'. Hence, the term "comprise" may in respect of an embodiment mean "consist of', but may in another embodiment mean "contain/include at least the defined species and optionally one or more other species".

For the sake of completeness, it is noted that in the examples described on the basis of the figures, desired effects of i) avoiding at least to a considerable extent that anti-biofouling light reaches a location where human beings 5 and/or animals may be present and ii) providing deviations from a planar surface with a sufficient amount of anti-biofouling light are obtained on the basis of choosing a certain orientation of the main directions of emission 23 of the light-emitting groups 22 of light sources 21 which are included in the light-emitting system 20. This should not be understood so as to mean that the invention is limited to setting a main orientation of light to be emitted from the light-emitting system 20 during operation thereof by means of determining a certain orientation of the light emission axes of the light sources 21 of the light-emitting system 20. The fact is that in general, the invention is about realizing a main orientation of emission by making appropriate choices in respect of the design of the light-emitting system 20. This does not necessarily involve adapting the orientation of the light emission axes of the light sources 21 to certain requirements, although this is a practical option. An alternative or additional option is the option of taking measures which are aimed at determining the way in which light is outcoupled from the light-emitting system 20, which can be done, for example, by making appropriate choices in respect of a surface structure of a slab 24 of transparent material as may be part of the light-emitting system 20 at a light-emitting side thereof.

Notable aspects of the invention can be summarized as follows. In the context of anti-biofouling, an arrangement 1 is provided which comprises an object 10 and a light-emitting system 20 arranged on at least a main surface 11a, 11b of the object 10. The light-emitting system 20 includes a plurality of light sources 21 configured to emit anti-biofouling light in an activated state thereof. Further, the light-emitting system 20 is configured to emit the anti-biofouling light in a direction away from the object 10. The light sources 21 are arranged in the light-emitting system 20 in at least two different light-emitting groups 22, each light-emitting group 22 being configured to emit the anti-biofouling light in a respective main direction of emission 23 and the main directions of emission 23 of at least two light-emitting groups 22 having different spatial orientations when viewed on an unfolded and flattened area of the main surface 11a, 11b where the at least two light-emitting groups 22 are located. In this way, it is achieved that the area that is reached by the anti-biofouling light during operation of the anti-biofouling arrangement 1 can be adjusted to particular requirements, which may be requirements as to where the presence of anti-biofouling light should be avoided and/or requirements as to where the presence of anti-biofouling light should be ensured despite complicating factors such as structural irregularities.

## Claims

1. Anti-biofouling arrangement (1), comprising:
an object (10), and
a light-emitting system (20) arranged on at least a main surface (11a, 1 1b) of the object (10), the light-emitting system (20) including a plurality of light sources (21) configured to emit anti-biofouling light in an activated state thereof,
wherein the light-emitting system (20) is configured to emit the anti-biofouling light in a direction away from the object (10), and
wherein the light sources (21) are arranged in the light-emitting system (20) in at least two different light-emitting groups (22), each light-emitting group (22) being configured to emit the anti-biofouling light in a respective main direction of emission (23) and the main directions of emission (23) of at least two light-emitting groups (22) having different spatial orientations when viewed on an unfolded and flattened area of the main surface (11a, 11b) where the at least two light-emitting groups (22) are located.

2. Anti-biofouling arrangement (1) according to claim 1, wherein the object (10) has a generally symmetrical appearance and the main surface is a single-symmetry surface (11a, 11b) of the object (10).

3. Anti-biofouling arrangement (1) according to claim 1 or 2, wherein the object is a vessel (10), and wherein the main surface (11a, 11b) is a part of the vessel's hull (11) that is located at one side of the vessel (10).

4. Anti-biofouling arrangement (1) according to any of claims 1-3, wherein the object (10) comprises at least two main surfaces (11a, 11b) and at least one transitional structure between the main surfaces (11a, 11b).

5. Anti-biofouling arrangement (1) according to any of claims 1-4, wherein the at least two light-emitting groups (22) of which the main directions of emission (23) have different spatial orientations when viewed on an unfolded and flattened area of the main surface (11a, 11b) where the at least two light-emitting groups (22) are located are arranged adjacent to each other on the main surface (11a, 11b).

6. Anti-biofouling arrangement (1) according to any of claims 1-5, wherein the object (10) comprises at least one protrusion (17, 18a, 18b) protruding with respect to the main surface (11a, 11b), and wherein a portion of the light-emitting system (20) located in the vicinity of the at least one protrusion (17, 18a, 18b) includes at least one light-emitting group (22) having a main direction of emission (23) towards the at least one protrusion (17, 18a, 18b).

7. Anti-biofouling arrangement (1) according to any of claims 1-6, wherein the main surface (11a, 11b) has at least one uneven area (16), and wherein a portion of the light-emitting system (20) located at the position of the at least one uneven area (16) or in the vicinity of the at least one uneven area (16) includes at least one light-emitting group (22) having a main direction of emission (23) towards the at least one uneven area (16).

8. Anti-biofouling arrangement (1) according to any of claims 1-7, wherein, assuming a normal, operational orientation of the object (10), the main direction of emission (23) of at least one of the light-emitting groups (22) of the light-emitting system (20) is along the gravity vector or at least has a component along the gravity vector.

9. Anti-biofouling unit (25) configured to be used in an anti-biofouling arrangement (1) according to any of claims 1-8 and including at least a portion of at least two different light-emitting groups (22) of the light-emitting system (20).

10. Set of anti-biofouling units (25) configured to be used in an anti-biofouling arrangement (1) according to any of claims 1-8 for composing at least a portion of the light-emitting system (20) of the anti-biofouling arrangement (1) on a main surface (11a, 11b) of an object (10), each anti-biofouling unit (25) including at least a portion of at least one of the light-emitting groups (22) of the light-emitting system (20), and the set comprising at least two types of anti-biofouling units (25) which are different as far as the main direction of emission (23) of the at least a portion of the at least one of the light-emitting groups (22) in the anti-biofouling unit (25) is concerned.

11. Method of applying a light-emitting system (20) to at least a main surface (11a, 11b) of an object (10) in an anti-biofouling arrangement (1) according to any of claims 1-8, wherein the light-emitting system (20) is positioned with respect to the at least the main surface (11a, 11b) and fixed on the object (10).

12. Method of designing an anti-biofouling arrangement (1) with an object (10) and a light-emitting system (20) to be arranged on at least a main surface (11a, 11b) of the object (10) and to be provided with a plurality of light sources (21) for emitting anti-biofouling light,
wherein the light-emitting system (20) is designed to emit the anti-biofouling light in a direction away from the object (10),
wherein the light-emitting system (20) is designed to include at least two different light-emitting groups (22) of light sources (21), wherein each light-emitting group (22) is designed to emit the anti-biofouling light in a respective main direction of emission (23), and
wherein the main directions of emission (23) of the light-emitting groups (22) of the light-emitting system (20) are determined in dependency of the intended position of the light-emitting groups (22) on the main surface (11a, 11b).

13. Method according to claim 12, wherein the object (10) is designed with at least one protrusion (17, 18a, 18b) protruding with respect to the main surface (11a, 11b), and wherein a portion of the light-emitting system (20) to be located in the vicinity of the at least one protrusion (17, 18a, 18b) is designed with at least one light-emitting group (22) having a main direction of emission (23) towards the at least one protrusion (17, 18a, 18b).

14. Method according to claim 12 or 13, wherein the main surface (11a, 11b) is designed with at least one uneven area (16), and wherein a portion of the light-emitting system (20) to be located in the at least one uneven area (16) or in the vicinity of the at least one uneven area (16) is designed with at least one light-emitting group (22) having a main direction of emission (23) towards the at least one uneven area (16).

15. Method according to any of claims 12-14, wherein the object is a vessel (10) and the main surface (11a, 11b) is a part of the vessel's hull (11), and
wherein a portion of the light-emitting system (20) to be located in a hull area (12) at the vessel's load line (13) is designed with at least one light-emitting group (22) having a main direction of emission (23) that is downward with respect to the vessel's horizontal (14) or at least has a component that is downward with respect to the vessel's horizontal (14).
